# EUROPEAN PATENT SPECIFICATION

(11) **EP 1 545 716 B1**
(45) Date of publication and mention of the grant of the patent: **08.05.2013**
(21) Application number: 03793837.0
(22) Date of filing: 05.09.2003
(51) Int. Cl.: A62C 27/00, A62C 13/00

(54) **DEVICE FOR EFFICIENT POSITIVE PRESSURE VENTILATION**
VORRICHTUNG FÜR EFFIZIENTE ÜBERDRUCKVENTILATION
DISPOSITIF DE VENTILATION EFFICACE SOUS PRESSION POSITIVE

(30) Priority: 06.09.2002 FI 20021592
(43) Date of publication of application: 29.06.2005
(73) Proprietor: Simultron Oy, 90241 Oulu (FI)
(72) Inventor: KARVONEN, Esa, FIN-90150 Oulu (FI)
(86) International application number: PCT/FI2003/000651
(87) International publication number: WO 2004/022165

(56) References cited:
- EP-A2- 1 166 823
- US-A- 4 886 233
- US-A- 5 941 314
- US-B1- 6 336 594

## Description

### FIELD OF THE INVENTION

The invention is related to a device for efficient positive pressure ventilation.

### BACKGROUND OF THE INVENTION

In modem fire fighting, positive pressure ventilators are used for removing smoke and flammable gases as quickly as possible from the scene of a fire. Fire fighting groups have normally fans with relatively low efficiency, e.g. US 4 886 223, which is sufficient for most fires which occur in relatively small rooms, e.g. residences. For normal cases of fire, high efficiency ventilators are too big and heavy and their extra-high efficiency is not useful. Moreover, high efficiency ventilators, e.g. EP 1 166 823, represent large investments, and only a very limited amount of such devices have been acquired for fire departments. Therefore, obtaining a high efficiency ventilator at the scene of a fire is normally delayed, and the situation may meanwhile break out of control. In cases in which a high efficiency ventilator would be necessary for removing smoke and flammable gases from a large room through a large opening, using a small ventilating capacity may be hazardous and dangerous because too low a positive pressure and flow only mix oxygen brought by the ventilator into the flammable gases but are not able to move the gases effectively out of the opening.

### SUMMARY OF THE INVENTION

An object of the invention is to provide a solution by which the ventilation of smoke and flammable gases from a large room may be accomplished quickly and effectively with available low efficiency ventilation fans. A further object is to provide a solution by which a high efficiency ventilation may be accomplished and controlled and adjusted according to need.

To achieve these objects, a device for efficient positive pressure ventilation according to the invention is characterised in that which is defined in the characterising part of claim 1. Other claims define various embodiments of the invention.

With the device of the invention, a necessary amount of low efficiency ventilation fans may be collected from the fire fighting groups arriving at the scene of a fire and by setting them adjacent to and on top of each other adjust and direct them to ventilate so that a strong enough and properly directed efficiency and flow is achieved for ventilating a large room or a room with a large opening. By adjusting the distances between the fans and separately the direction of each fan, the primary and secondary flows may be optimised. It is to be noted that with ventilation fans an ejection flow is typically three to four times the axial flow. As the ventilation fans may be adjusted vertically and horizontally, and the rate of rotation of the fans may also be adjusted, the direction and pattern of the ventilation may be managed from case to case.

The device of the invention may be transported to the scene of a fire with the first fastest group whereby the positioning and directing of the device may be thought and prepared in advance and have the racks and seats turned and locked ready in place. The device may be taken into use immediately as further ventilation fans arrive with further fire fighting groups at the scene. One person with the device and the ventilation fans is able to take care of the ventilation in a large room of fire. The situation proceeding, any ventilation fan is easily and quickly released from the racks and transferred according to need to ventilate confined smaller rooms.

### BRIEF DESCRIPTION OF THE DRAWINGS

The invention and some embodiments thereof are described in further detail in the following with reference to the accompanying drawings, in which:
Fig. 1 is a schematic side view presenting a usual ventilation fan for fire fighting;
Figs. 2 to 4 present as a schematic side, plan and front view, respectively, an embodiment of the device of the invention and the use thereof;
Figs. 5 to 7 present as schematic side views another embodiment of the device of the invention and the operation thereof;
Fig. 8 is a schematic plan view of a realisation of a seat for a ventilation fan;
Fig. 9 presents a clamping device of the seat of Fig. 8 in further detail;
Fig. 10 presents a further embodiment of the device of the invention;
Fig. 11 is a front view presenting a further embodiment of the device of the invention and the use thereof; and
Figs. 12 and 13 present as a front view and view from below, respectively, a frame of the device of the invention in a still further embodiment thereof.

### DETAILED DESCRIPTION OF THE INVENTION

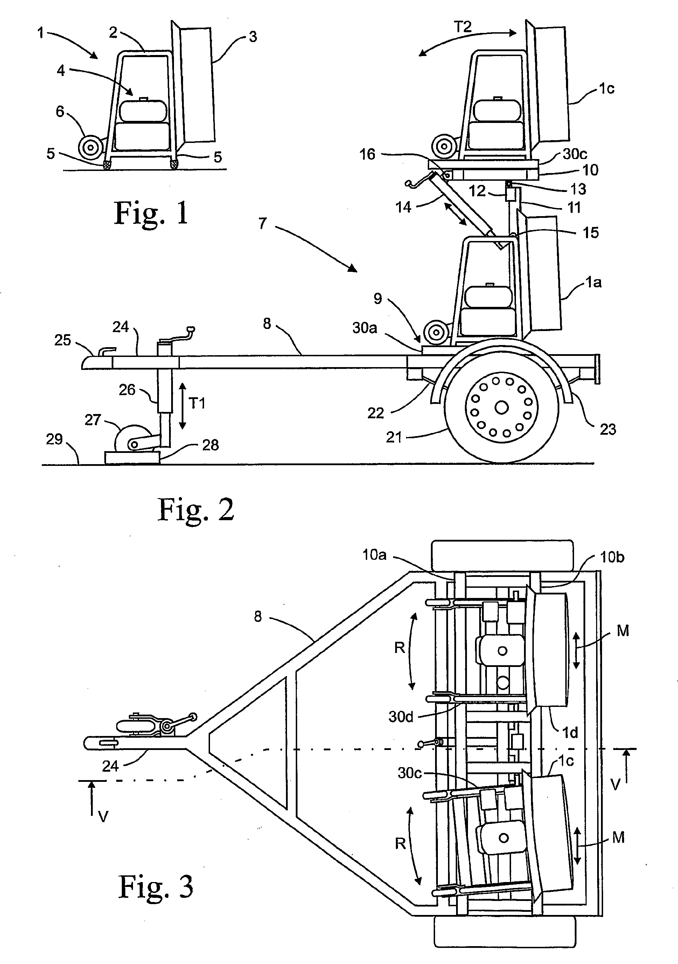

In a usual ventilation fan 1 of Fig. 1 there is a frame 2 to which the fan portion 3 is attached at the front side and behind it the power and control devices 4 including a gasoline engine and the accessories. The frame includes legs 5 for setting the ventilator in place and wheels attached thereto for transferring. The size of a usual ventilation fan is about 60 centimetres (24 inches) and the engine power about 5 kW, for example.

The ventilator arrangement 7 of Figs. 2 to 4 includes a portable rack frame 8 provided with means for transporting it as coupled to the trailer hitch of a vehicle. To this end, the frame includes wheels 21 provided with springs 22 and fenders 23, and a trailing arm 24 and coupling means 25 for connection to a hitch. An adjustable support leg 26 provided with a wheel 27 is additionally attached to the trailing arm 24. The adjustment T1 of the leg affects to some degree the directing of the ventilation fans 1a ... 1d. During the use, the wheel is provided with a chock 28, for example, for keeping the rack frame in place against the ground 29.

The rack frame 8 includes in the plane of the frame, for the ventilation fans 1a and 1b, a first rack 9 consisting of beams 9a and 9b and the beams connecting them. Above it, another rack 10, for the ventilation fans 1c and 1d, is attached on the supporting arm 11, the rack consisting of beams 10a and 10b and the beams connecting them. At the upper end of the supporting arm 11 there is a lateral beam 12 to which the rack 10 is attached with hinges 13. Between the support arm 11 and the rear edge of the rack 10 an adjustment screw 14 is attached with pivotal attachments 15 and 16, respectively, for tilting the rack 10 and the ventilation fans on it by means of the screw forward or backward in the way indicated by arrow T2.

For each ventilation fan 1a, 1b, 1c and 1d there is a corresponding seat 30a, 30b, 30c, 30d at the corresponding rack 9 or 10. The seats are dimensioned and made to conform with the support legs or other support members of the ventilation fans so that a ventilation fan is easy to set in place and is kept in one's place during the operation. The seats may be moved laterally and rotated in the way indicated by arrows M and R (Fig. 3).

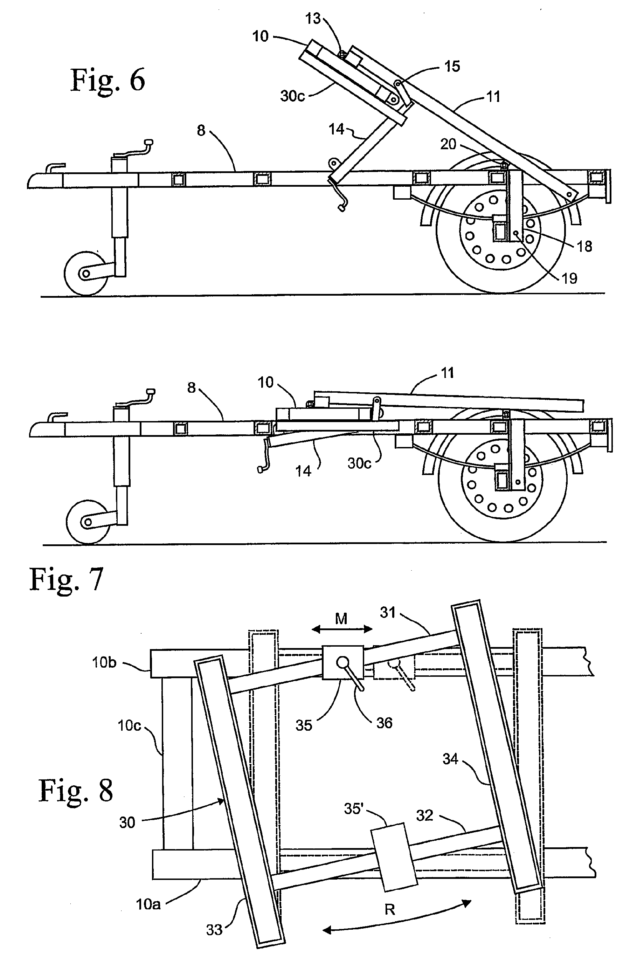

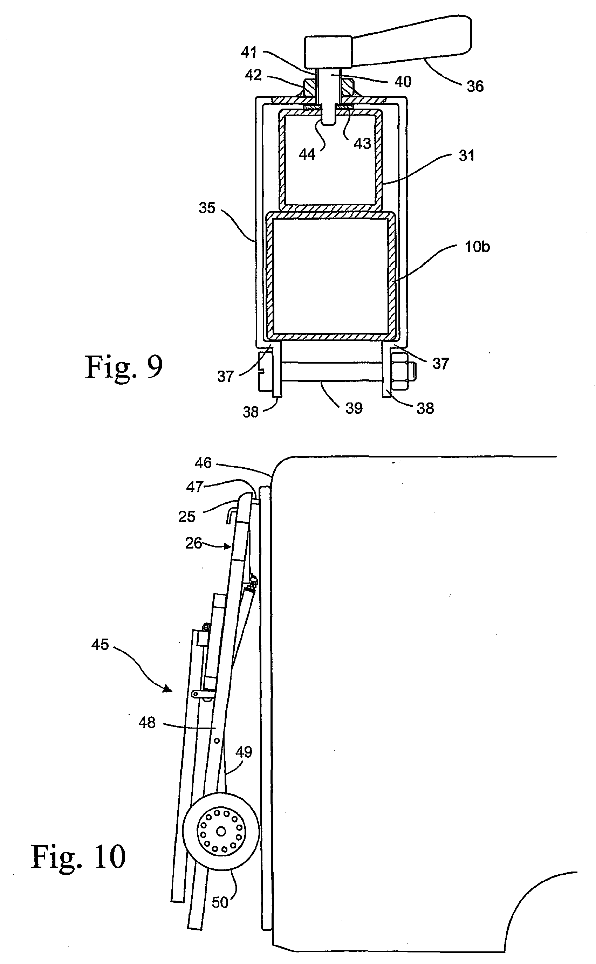

Figs. 8 and 9 present a realisation of the seat and its attachment to the rack. The seat 30 is formed by troughs 33 and 34 into which the legs 5 of the ventilation fans are placed, the troughs being closed at the sides and the ends. The side troughs are connected by beams 31 and 32. The seat is attached at the front beam 31 with a clamping device 35 to the front beam 10b of the rack, and it may be moved laterally and rotated in the way indicated by arrows M and R and then be locked in place with a lever 36 of the clamping device. On the other end of the seat it includes a bracket around the beam 10a which allows the seat to move and rotate but prevents it from tilting, for example, as the device is transported with the ventilation fans on and an abrupt stop occurs.

The body 35 of the clamping device (Fig. 9) is adapted and attached with bent members 37 and 38 and a screw 39 to encircle the beams 31 and 10b suitably so that the device 35 and the beam 31 may be moved in relation to the beam 10b as the clamping is released. The beam 31 is narrower than the beam 10b so that it is also able to rotate to the necessary degree in relation to the beam 10b. The clamping device includes a portion 42 provided with a thread in which a clamping screw 40 with a corresponding thread is rotating. The clamping screw has a thinner lower end 44 with no thread, and the beam 31 is provided with a corresponding hole. The clamping screw is by means of a washer 43 tightening the beams 31 and 10b against each other. As the clamping is released, the beam 31 may be rotated around the lower end 44 of the screw to a desired position.

As may be seen in view of the above consideration, the seats, adjustments and clamping means have been designed and realised in such a way that the ventilation fans may be set in place and directed quickly.

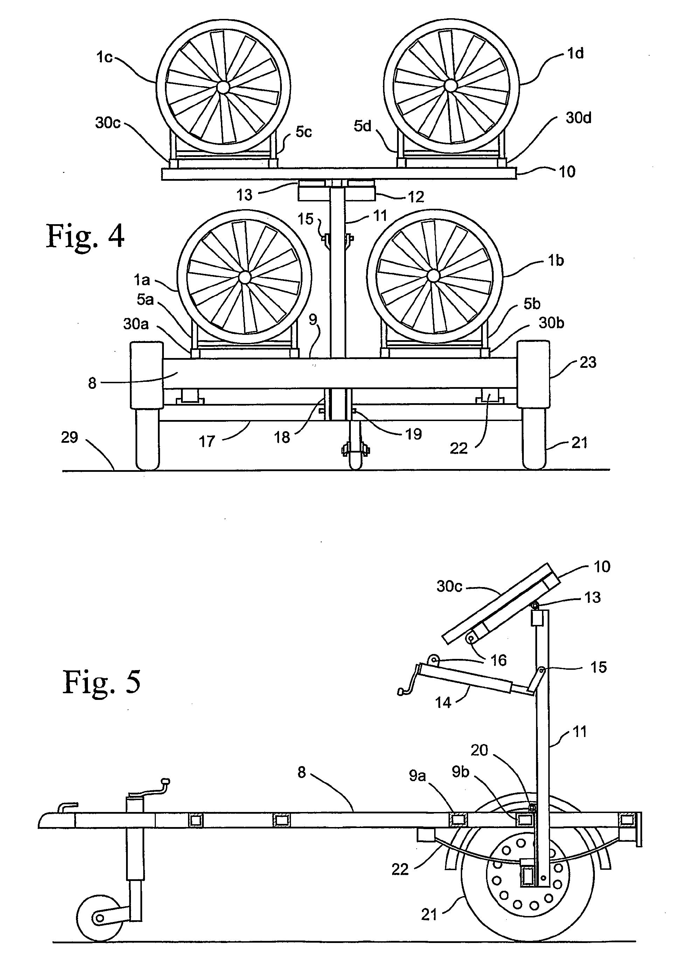

The arrangement is advantageously foldable as is presented in Figs. 5 to 7 in which the rack frame is presented in section through line V-V of Fig. 3. The support arm 11 is attached by a hinge 20 to the beam 9b of the lower rack. Between the beam 9b and the axle beam 17 a U-formed beam 18 is attached for steady attachment of the lower end of the support arm 11, the latter being attached to the U-formed beam by means of a pin or equivalent member 19 during the use of the device. As the upper rack is folded down, the attachment 16 of the adjustment screw 14 to the rear edge of the rack is released (Fig. 5) whereby the rack 10 with the seats 30c may be turned against the support arm. The attachment 19 of the lower end of the support arm is released whereby the support arm may be turned forward (Fig. 6). In Fig. 7, the support arm with the rack is folded against the rack frame 8.

Fig. 10 presents a realisation of the device of the invention the purpose of which is to be transported as suspended at the rear of a vehicle 46. The device 45 includes a rack frame 48 in which the racks and seats have been arranged in a similar way as in the device described above. Wheels 50 have been attached by means of pivotal rigid suspending arms 49. At the rear of the vehicle, a hook 47 corresponding to a hitch of a vehicle is attached, and the device include a usual coupling member 25 for attachment to the hook. This kind of attachment is quick and reliable. Also the adjustable support leg 26 at the front of the device is attached pivotally so that it may be turned against the frame during transporting.

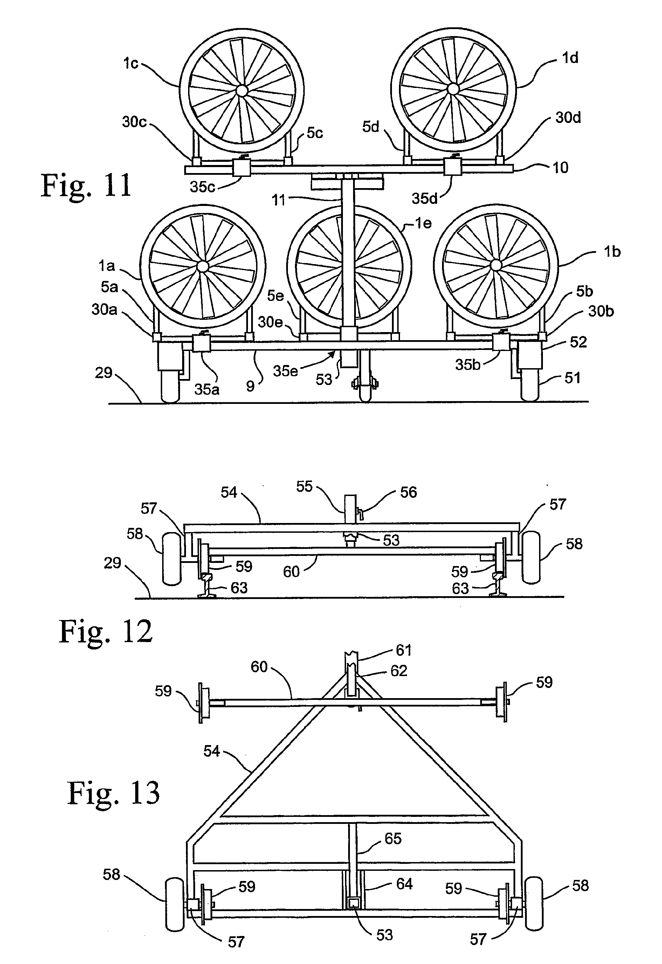

Fig. 11 presents a realisation corresponding to that of Fig. 4, and the corresponding parts are indicated with the same reference numerals. In this realisation, the wheels 51 are small so that the upper face of the fenders 52 remains at the level of the rack 9 formed by the frame. The corresponding clamping devices 35a and 35b allow moving the ventilation fans 1a and 1b so that they can, to some extent, lay outside the fenders 52. An additional fifth ventilation fan 1e may be placed between the fans 1a and 1b and attached by means of the frame 5e, seat 30e and clamping device 35e to a rear beam of the frame, for example. In this way the ventilation efficiency may be further increased. In this case the support arm 11 of the upper rack is in front of the ventilation fan, but the supporting of the upper rack may arranged also so that the supporting members are behind the ventilation fan. The upper rack 10 may also be made wide enough so that a third ventilation fan may be placed in the same way on it, too.

Figs. 12 and 13 present in a simplified way a portable frame 54 of such a device according to the invention which is made for use in tunnels provided with rails, e.g. in railway or underground tunnels. In the frame there is a sleeve 53 for attachment of the upper rack, the sleeve being attached to the frame by means of plates 64 and a support arm 65. Usual wheels with tires 58 and inside them wheels 63 suitable for rails have been attached to support members 57. At the other end of the frame, close to a trailing arm 61 (described only partially), there is a sleeve 55 to which a beam 60 may be attached at a suitable height by means of a rod and a clamping member 56, the other two wheels 59 suitable for rails being attached at the ends of the beam 60. A support leg 62 (described only partially) for preventing sliding is additionally attached to the frame 54.

It is apparent that the invention is by no means restricted to the embodiments described above. The rack frame, racks and seats for the ventilation fans as well as the attachments and adjustments thereof may be realised in various alternative ways. The support of the upper rack, for example, may be attached to the frame by means of a detachable attachment instead of the pivotal attachment, and the racks and seats adapted for setting on the frame may be attached to the frame for transporting with corresponding clamping means fitted to each other. There are also many alternative ways of realising the transporting means, i.e. wheels, optional spring arrangements and various attachments.

The invention may vary within the scope of the accompanying claims.

## Claims

1. A device for efficient positive pressure ventilation comprising a frame (8, 48, 54) provided with wheels (21, 51, 58) and devices (24, 25) for coupling the frame to a hitch of a vehicle, **characterised in that** it comprises:
several racks (9, 10) and seats (30a, 30b, 30c, 30d, 30e) on the frame for placing several ventilation fans (1a, 1b, 1c, 1d, 1e) at the seats adjacent to and/or on top of each other; and
means (35, 35'; 35a, 35b, 35c, 35d, 35e) for moving, rotating and locking the racks and seats in place to set the distances and directions between said several ventilation fans for achieving an efficient positive pressure ventilation and managing the direction and pattern of the ventilation.

2. A device according to claim 1, **characterised in that** it comprises means (14, 26) for turning (T1, T2) the rack (10, 9) around a horizontal axis for directing the ventilation fans.

3. A device according to claim 1, **characterised in that** it comprises means (30, 35) for moving (M) and setting the seat (30) laterally on the rack (10).

4. A device according to claim 1, **characterised in that** it comprises means (30, 35) for rotating (R) the seat (30) on the rack (10) around a vertical axis.

5. A device according to claim 1, **characterised in that** it is provided with means (18, 19, 20) for folding the rack (10) against the frame (8).

6. A device according to claim 1, **characterised in that** it comprises additionally wheels (59) for transporting the device on rails (63).

## Patentansprüche

1. Die Vorrichtung für Überdruckblasen enthält einen mit Rädern (21, 51, 58) versehenen Rumpf (8, 18, 54) und Vorrichtungen (24, 25) zum Ankuppeln des Rumpfs am Anhängerhaken eines Fahrzeugs, **dadurch gekennzeichnet, dass** sie Folgendes enthält:
mehrere an dem Rumpf gestützte Gestelle (9, 10) und Unterlagen (30a, 30b, 30c, 30d, 30e) um mehrere Gebläse (1a, 1b, 1c, 1d) nebeneinander und/oder aufeinander auf die Unterlagen aufzulegen sowie
Vorrichtungen (35, 35'; 35a, 35b, 35c, 35d, 35e) um die Gestelle und die Unterlagen zu fördern, zu drehen und zu verriegeln, um die Entfernungen der Gebläse untereinander und die Richtungen der genannten Gebläse einzustellen, um ein effektives Überdruckblasen herzustellen und die Blasrichtung und -figur zu kontrollieren.

2. Vorrichtung gemäß Anspruch 1, **dadurch gekennzeichnet, dass** sie Mittel (14, 26) enthält zum Drehen (T1, T2) des Gestells (10, 9) um die waagerechte Achse zum Auszurichten der Gebläse.

3. Vorrichtung gemäß Anspruch 1, **dadurch gekennzeichnet, dass** sie Mittel (30, 35) enthält zum seitlichen Fördern (M) und Auflegen der Unterlage (30) mit dem Gestell (10).

4. Vorrichtung gemäß Anspruch 1, **dadurch gekennzeichnet, dass** sie Mittel (30, 35) enthält um die Unterlage (30) mit dem Gestell (10) um die senkrechte Achse zu drehen (R).

5. Vorrichtung gemäß Anspruch 1, **dadurch gekennzeichnet, dass** sie mit Mitteln (18, 19, 20) zum Zusammenfalten des Gestells (10) gegen den Rumpf (8) versehen ist.

6. Vorrichtung gemäß Anspruch 1, **dadurch gekennzeichnet, dass** sie außerdem Räder (59) enthält zum Fördern der Vorrichtung auf Schienen (63).

## Revendications

1. Dispositif de ventilation efficace sous pression positive comprenant un cadre (8, 48, 54) muni de roues (21, 51, 58) et de dispositifs (24, 25) pour accoupler le cadre à un attelage de véhicule, **caractérise en ce qu'**il comprend :
plusieurs châssis (9, 10) et sièges (30a, 30b, 30c, 30d, 30e) sur le cadre pour placer plusieurs ventilateurs (1a, 1b, 1c, 1d, 1e) sur les sièges de manière adjacente et/ou au dessus l'un de l'autre, et
des moyens (35, 35'; 35a, 35b, 35c, 35d, 35e) permettant le déplacement, la rotation et le verrouillage des châssis et des sièges pour ajuster les distances et les directions entre lesdits ventilateurs pour atteindre une ventilation efficace sous pression positive et pour contrôler la direction et le schéma de ventilation.

2. Dispositif selon la revendication 1, **caractérisé en ce qu'**il comprend des moyens (14, 26) pour faire tourner (T1, T2) le châssis (10, 9) autour d'un axe horizontal pour diriger les ventilateurs.

3. Dispositif selon la revendication 1, **caractérisé en ce qu'**il comprend des moyens (30, 35) pour déplacer (M) et régler le siège (30) latéralement sur le châssis (10).

4. Dispositif selon la revendication 1, **caractérisé en ce qu'**il comprend des moyens (30, 35) pour faire pivoter (R) le siège (30) sur le châssis (10) autour d'un axe vertical.

5. Dispositif selon la revendication 1, **caractérisé en ce qu'**il est muni de moyens (18, 19, 20) pour plier le châssis (10) contre le cadre (8).

6. Dispositif selon la revendication 1, **caractérisé en ce qu'**il comprend en plus des roues (59) pour transporter le dispositif sur rails (63).
